# EUROPÄISCHE PATENTSCHRIFT

(11) **EP 1 964 872 B1**
(45) Veröffentlichungstag und Bekanntmachung des Hinweises auf die Patenterteilung: **21.10.2009**
(21) Anmeldenummer: 08151296.4
(22) Anmeldetag: 12.02.2008
(51) Int. Cl.: C08G 77/06

(54) **Verfahren zur Herstellung von Organyloxygruppen aufweisenden Organosiliciumverbindungen**
Process for preparing organosilicon compounds having organyloxy groups
Procédé de préparation de composés organosiliciques contenant des groupes organyloxy

(30) Priorität: 26.02.2007 DE 102007009286
(43) Veröffentlichungstag der Anmeldung: 03.09.2008
(73) Patentinhaber: Wacker Chemie AG, 81737 München (DE)
(72) Erfinder: Prasse, Marko, 01612, Glaubitz (DE)
(74) Vertreter: Budczinski, Angelika

(56) Entgegenhaltungen:
- US-A- 4 515 932
- US-A- 5 055 502

## Beschreibung

Die vorliegende Erfindung betrifft ein Verfahren zur Herstellung von Organyloxygruppen aufweisenden Organosiliciumverbindungen in Anwesenheit eines Katalysatorsystems enthaltend Zinkchelat und ein Amin und/oder Alkohol sowie deren Verwendung in bei Raumtemperatur vernetzenden Massen.

Seit langem bekannt ist die Herstellung von Siloxanbindungen aus Silanol und Alkoxysilanen mit Hilfe von Titanaten und gegebenfalls Aminen. Hierzu sei beispielsweise auf US-A 3,504,051 verwiesen. Zur Herstellung von Alkoxy-terminierten Polydimethylsiloxanen ist auch die Kombination verschiedener Säuren mit Aminen beschrieben, wie z.B. organische Säuren mit Aminen in FR 2,604,713, Lewis-Säuren mit Aminen in US-A 4,515,932 oder Ameisensäure mit Aminen in EP-A 304 701. In US-A 5,055,502 wird die Verwendung von Zinkchelaten als Katalysator für die Herstellung von Alkoxy-terminierten Polydimethylsiloxanen beschrieben. All diese Herstellverfahren haben bestimmte Nachteile: Meist sind die Reaktionszeiten sehr lang, so dass höhere Temperaturen als die bei der Mischung üblicherweise entstehenden Temperaturen nötig sind, bzw. die benötigten Katalysatorkonzentrationen sind so hoch, dass die Katalysatoren in einem zusätzlichen Arbeitsschritt entfernt oder desaktiviert werden müssen. Viele Systeme neigen zur Vergilbung oder sind nur in bestimmten Formulierungen stabil.

Gegenstand der Erfindung ist ein Verfahren zur Herstellung von Organyloxygruppen aufweisenden Organosiliciumverbindungen, dadurch gekennzeichnet, dass mindestens eine Silanolgruppe aufweisende Organosiliciumverbindung (A) mit mindestens zwei Organyloxygruppen enthaltender Verbindung (B) in Anwesenheit einer Zubereitung (C) enthaltend Zinkchelat (C1) und mindestens einen Zusatzstoff (C2), ausgewählt aus der Gruppe bestehend aus basischen Stickstoff enthaltender Verbindung (C21) und Alkohol (C22), umgesetzt wird.

Bei der erfindungsgemäß eingesetzten Silanolgruppen aufweisenden Organosiliciumverbindung (A) handelt es sich bevorzugt um solche enthaltend Einheiten der Formel

Rₐ(OH)_{b}SiO_{(4-a-b)/2} (I),

wobei
R gleiche oder verschiedene SiC-gebundene, gegebenenfalls substituierte Kohlenwasserstoffreste bedeuten,
a 0, 1, 2 oder 3, bevorzugt 1 oder 2, ist und
b 0, 1 oder 2, bevorzugt 0 oder 1, ist,
mit der Maßgabe, dass die Summe aus a+b<4 ist und pro Molekül mindestens eine Einheit der Formel (I) mit b verschieden 0 anwesend ist.

Bei den erfindungsgemäß eingesetzten Organosiliciumverbindungen (A) kann es sich sowohl um Silane handeln, d.h. Verbindungen der Formel (I) mit a+b=4, als auch um Siloxane, d.h. Verbindungen enthaltend Einheiten der Formel (I) mit a+b<3. Vorzugsweise handelt es sich bei den erfindungsgemäß eingesetzten Organosiliciumverbindungen um Organopolysiloxane, insbesondere um solche, die aus Einheiten der Formel (I) bestehen.

Im Rahmen der vorliegenden Erfindung sollen von dem Begriff Organopolysiloxane sowohl polymere, oligomere wie auch dimere Siloxane mitumfasst werden.

Beispiele für R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der **α**- und der **β**-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest; sowie gamma-funktionalisierte Propylreste, wie der 3-Aminopropylrest, 3-(2-Aminoethyl)aminopropylrest, 3-Glycidoxypropylrest, 3-Mercaptopropylrest und 3-Methacryloxypropylrest.

Bevorzugt handelt es sich bei Rest R um Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind. Besonders bevorzugt handelt es sich bei Rest R um Kohlenwasserstoffreste mit 1 bis 8 Kohlenstoffatomen, insbesondere um den Methylrest.

Bevorzugt handelt es sich bei Organosiliciumverbindung (A) um mindestens zwei Silanolgruppen aufweisende Organosiliciumverbindungen.

Bevorzugt handelt es sich bei Organosiliciumverbindung (A) um im Wesentlichen lineare Organopolysiloxane.

Die erfindungsgemäß eingesetzten Polymere der Formel (I) haben eine Viskosität von bevorzugt 10² bis 10⁸ mPas, besonders bevorzugt von 1 000 bis 350 000 mPas, jeweils bei 25°C.

Beispiele für erfindungsgemäß eingesetzte Organosiliciumverbindung (A) sind
HO (Si (CH₃) ₂O)₂₉₋₁₀₀₀Si(CH₃) ₂ (CH₂) ₃NH₂,
HO (Si (CH₃) ₂O) ₂₉₋₁₀₀₀Si (CH₃) ₂ (OH),
HO(Si(CH₃)₂O)₂₉₋₁₀₀₀Si(CH₃) ₃,
HO(Si(CH₃)₂O)₀₋₁₀₀Si(CH₃)₂(CH₂)₃O(CH₂CH (CH₃) O)₁₀₋₁₀₀₀(CH₂) ₃ (Si (CH₃) ₂O)₀₋₁₀₀Si (CH₃)₂(OH),
HO (Si (CH₃)₂O)₃₋₅₀₀Si(O)₃[(Si(CH₃)₂O)₃₋₅₀₀H]₃ und
HO (Si (CH₃)₂O)₃₋₅₀₀Si(CH₃) (O)₂[(Si(CH₃)₂O)₃₋₅₀₀H]₂,
wobei HO (Si (CH₃) ₂O)₃₀₋₁₀₀₀Si (CH₃) ₂ (CH₂) ₃NH₂,
HO (Si (CH₃) ₂O)₃₀₋₁₀₀₀Si(CH₃)₂ (OH),
HO (Si (CH₃)₂O)₃₀₋₁₀₀₀Si(CH₃) ₃ und
HO(Si(CH₃)₂O)₃₋₅₀₀Si(CH₃)(O)₂[(Si(CH₃)₂O)₃₋₅₀₀H]₂
bevorzugt und HO (Si (CH₃)₂O)₃₀₋₁₀₀₀Si(CH₃)₂(OH)
besonders bevorzugt sind.

Komponente (A) sind handelsübliche Produkte bzw. nach in der Chemie gängigen Verfahren herstellbar.

Bei der erfindungsgemäß eingesetzten Organyloxygruppen aufweisenden Verbindung (B) handelt es sich bevorzugt um solche enthaltend Einheiten der Formel

R¹_{c}(OR²)_{d}(OH)ₑSiO_{(4-c-d-e)/2} (II),

wobei
R¹ gleich oder verschieden sein kann und eine für Rest R angegebene Bedeutung hat,
R² gleich oder verschieden sein kann und gegebenenfalls substituierter Kohlenwasserstoffrest, der mit Sauerstoffatomen unterbrochen sein kann, bedeutet,
c 0, 1, 2 oder 3 ist,
d 0, 1, 2, 3 oder 4 ist und
e 0 oder 1, bevorzugt 0, ist,
mit der Maßgabe, dass die Summe aus c+d+e<4 ist und pro Molekül mindestens zwei Reste -OR² vorhanden sind.

Bei den erfindungsgemäß eingesetzten Verbindungen (B) kann es sich sowohl um Silane handeln, d.h. Verbindungen der Formel (II) mit c+d+e=4, als auch um Siloxane, d.h. Verbindungen enthaltend Einheiten der Formel (II) mit c+d+e<3. Vorzugsweise handelt es sich bei den erfindungsgemäß eingesetzten Verbindungen (B) um Silane der Formel (II), wobei d dann bevorzugt 3 oder 4 ist.

Beispiele für Reste R¹ sind die für Rest R angegebenen Beispiele.

Bevorzugt handelt es sich bei Rest R¹ um Methyl-, Ethyl-, n-Propyl-, iso-Propyl-, 1-n-Butyl-, 2-n-Butyl-, iso-Butyl-, tert.-Butyl-, Phenyl- und Vinylrest, wobei Methyl- und Vinylrest besonders bevorzugt sind.

Beispiele für Reste R² sind die für Rest R angegebenen Beispiele.

Bevorzugt handelt es sich bei Rest R² um den Methyl-, Ethyl- und iso-Propylrest, wobei der Methylrest besonders bevorzugt ist.

Bevorzugt handelt es sich bei Verbindung (B) um mindestens drei Organyloxygruppen aufweisende Organosiliciumverbindungen.

Beispiele für erfindungsgemäß eingesetzte Verbindung (B) sind Methyltrimethoxysilan, Dimethyldimethoxysilan, Tetramethoxysilan, Vinyltrimethoxysilan, Methylvinyldimethoxysilan, Methyltriethoxysilan, Tetraethoxysilan, Phenyltrimethoxysilan, n-Butyltrimethoxysilan, iso-Butyltrimethoxysilan und tert-Butyltrimethoxysilan, sowie deren Teilhydrolysate, wobei Methyltrimethoxysilan, Tetramethoxysilan, Vinyltrimethoxysilan, Methylvinyldimethoxysilan, Methyltriethoxysilan, Tetraethoxysilan und n-Butyltrimethoxysilan bevorzugt sowie Methyltrimethoxysilan, Tetramethoxysilan, Vinyltrimethoxysilan, Tetraethoxysilan und n-Butyltrimethoxysilan besonders bevorzugt sind.

Komponente (B) sind handelsübliche Produkte bzw. nach in der Chemie gängigen Verfahren herstellbar.

Bei dem erfindungsgemäßen Verfahren wird Komponente (B) bevorzugt in 1 bis 100-fachem Überschuss, besonders bevorzugt in 2 bis 50-fachem molaren Überschuss, jeweils bezogen auf die molare Menge an Si-OH Gruppen in der Verbindung (A), eingesetzt.

Bei dem erfindungsgemäßen Verfahren wird Zubereitung (C) in Mengen von bevorzugt 5 bis 10000 Gew.-ppm, besonders bevorzugt 100 bis 3000 Gew.-ppm, jeweils bezogen auf die Gesamtmenge an Komponente (A) und (B), eingesetzt.

Bei dem erfindungsgemäß eingesetzten Zinkchelat (C1) handelt es sich bevorzugt um solche der Formel (III) 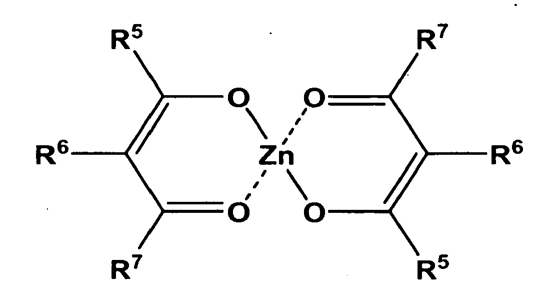 wobei R⁵, R⁶ und R⁷ jeweils unabhängig voneinander gleich oder verschieden sein können und Wasserstoffatom, gegebenenfalls substituierten Kohlenwasserstoffrest oder Organyloxyrest bedeuten.

Beispiele für Kohlenwasserstoffreste R⁵, R⁶ und R⁷ sind jeweils unabhängig voneinander die für Rest R und Rest -OR² angegebenen Beispiele. Falls es sich bei R⁵, R⁶ und R⁷ um substituierte Kohlenwasserstoffreste handelt, sind als Substituenten jeweils unabhängig voneinander Halogenatome, Aminogruppen, Ethergruppen, Estergruppen, Epoxygruppen, Mercaptogruppen, Cyanogruppen oder (Poly)glykolreste bevorzugt, wobei letztere aus Oxyethylen- und/oder Oxypropyleneinheiten aufgebaut sind.

Bevorzugt handelt es sich bei den Resten R⁵ und R⁷ unabhängig voneinander um Wasserstoffatom, Rest -OR' mit R' gleich gegebenenfalls substituierter Kohlenwasserstoffrest, wie Methoxy-, Ethoxy-, Isopropoxy-, Butoxy- und Phenoxyrest, und gegebenenfalls substituierte Kohlenwasserstoffreste mit 1 bis 18 Kohlenstoffatomen, besonders bevorzugt um Methyl-, Ethyl-, Phenyl-, Trifluoromethylreste, Reste (CH₃)₃C-, Ph-CH₂- oder (CH₃)₂CH-, insbesondere um den Methylrest, Ethylrest, den (CH₃)₃C- oder (CH₃)₂CH-Rest, jeweils mit Ph gleich Phenylrest.

Bevorzugt handelt es sich bei Rest R⁶ um Wasserstoffatom sowie um gegebenenfalls substituierte Kohlenwasserstoffreste mit 1 bis 18 Kohlenstoffatomen, besonders bevorzugt um Wasserstoffatom sowie den Methyl- und Ethylrest, insbesondere um Wasserstoffatom.

Obwohl in Formel (III) nicht ausgedrückt, können zwei der Reste R⁵, R⁶ und R⁷ zusammen auch einen difunktionellen, gegebenenfalls substituierten Kohlenwasserstoffrest mit 5 bis 12 Kohlenstoffatomen darstellen. R⁷ und R⁵ können zusammen einen Ring bilden, wie im 1,3-Cycloheptandion oder 1,3-Cyclohexandion. R⁶ und R⁵ können zusammen einen Ring bilden, wie in den Salicylsäureestern, wie Salicylsäure-benzylester, Salicylsäure-phenylester, Salicylsäure-ethylester, Salicylsäure-(2-ethylhexyl)-ester, 2-Hydroxybenzaldehyd oder wie in 2-Acetyl-cyclopentanon, 2-Acetyl-cyclohexanon oder 2-Acetyl-1,3-cyclohexandion.

Beispiele für erfindungsgemäß eingesetztes Zinkchelat (C1) sind Zink-bis(hexafluoracetylacetonat), Zink-bis-(1,3-diphenyl-1,3-propandionat), Zink-bis-(1-phenyl-5-methyl-1,3-hexandionat), Zink-bis(1,3-cyclohexandionat), Zink-bis(2-acetyl-cyclohexanonat), Zink-bis(2-acetyl-1,3-cyclohexandionat), Zink-bis-(ethyl-salicylat), Zink-bis(diethyl-malonat), Zink-bis(ethyl-acetacetat), Zink-bis(benzyl-salicylat), Zink-bis-acetylacetonat und Zink-bis-(2,2,6,6-tetramethyl-3,5- heptandionat), wobei Zink-bis-acetylacetonat und Zink-bis-(2,2,6,6-tetramethyl-3,5-heptandionat) bevorzugt sind.

Komponente (C1) sind handelsübliche Produkte bzw. nach in der Chemie gängigen Verfahren herstellbar.

Die erfindungsgemäß eingesetzte Zubereitung (C) enthält Zinkchelat (C1) in Mengen von 1 bis 80 Gew.-%, besonders bevorzugt von 5 bis 60 Gew.-%, insbesondere von 10 bis 50 Gew.-%.

Bei den in der erfindungsgemäß eingesetzten Zubereitung (C) gegebenenfalls enthaltenden basischen Stickstoff aufweisenden Verbindungen (C21) handelt es sich bevorzugt um solche, ausgewählt aus der Gruppe bestehend aus Verbindungen der Formel

NR⁸₃ (IV),

wobei R⁸ gleich oder verschieden sein kann und Wasserstoffatom oder Kohlenwasserstoffreste, die gegebenenfalls mit Hydroxygruppen, Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, bedeutet, mit der Maßgabe, dass in Formel (IV) höchstens zwei R⁸ die Bedeutung von Wasserstoffatom haben,
aliphatischen cyclischen Aminen, wie beispielsweise Piperidin und Morpholin,
sowie Organosiliciumverbindungen mit mindestens einem basischen Stickstoff aufweisenden organischen Rest enthaltend Einheiten der Formel

   R⁹ₖAₗSi (OR¹⁰)ₘO_{(4-k-l-m)/2} (V),

   worin
R⁹ gleich oder verschieden sein kann und einen einwertigen, gegegebenenfalls substituierten SiC-gebundenen, von basischem Stickstoff freien organischen Rest bedeutet,
R¹⁰ gleich oder verschieden sein kann und Wasserstoffatom oder gegebenenfalls substituierte Kohlenwasserstoffreste bedeutet,
A gleich oder verschieden sein kann und einen einwertigen, Sigebundenen Rest mit basischem Stickstoff bedeutet,
k 0, 1, 2, oder 3,
1 0, 1, 2, 3 oder 4 und
m 0, 1, 2 oder 3 ist,
mit der Maßgabe, dass die Summe aus k+1+m kleiner oder gleich 4 ist und pro Molekül mindestens ein Rest A anwesend ist.

Bei den erfindungsgemäß eingesetzten Organosiliciumverbindungen (C21) kann es sich sowohl um Silane handeln, d.h. Verbindungen der Formel (V) mit k+1+m=4, als auch um Siloxane, d.h. Verbindungen enthaltend Einheiten der Formel (V) mit k+1+m<3. Falls es sich bei den erfindungsgemäß eingesetzten Organosiliciumverbindungen um Organopolysiloxane handelt, sind solche, die aus Einheiten der Formel (V) bestehen, bevorzugt.

Beispiele für Rest R⁸ und R⁹ sind jeweils unabhängig voneinander die für R angegebenen Beispiele für gegebenenfalls substituierte Kohlenwasserstoffreste.

Bei Rest R⁸ handelt es sich vorzugsweise um Kohlenwasserstoffreste mit 1 bis 18 Kohlenstoffatomen, wobei der Ethyl-, n-Propyl-, Isopropyl-, n-Butyl-, iso-Butyl-, sec-Butyl-, 2-Ethylhexyl-, Cyclohexyl-, 1-Methylheptyl- und n-Octylrest besonders bevorzugt sind, insbesondere der n-Butylrest.

Bei Rest R⁹ handelt es sich vorzugsweise um Kohlenwasserstoffreste mit 1 bis 18 Kohlenstoffatomen, wobei der Methyl-, Ethyl- und n-Propylrest besonders bevorzugt sind, insbesondere der Methylrest.

Beispiele für gegebenenfalls substituierte Kohlenwasserstoffreste R¹⁰ sind die für Rest R² angegebenen Beispiele.

Bei den Resten R¹⁰ handelt es sich vorzugsweise um Wasserstoffatom und gegebenenfalls mit Stickstoff und Sauerstoff substituierte Kohlenwasserstoffreste mit 1 bis 18 Kohlenstoffatomen, besonders bevorzugt um Wasserstoffatom und Kohlenwasserstoffreste mit 1 bis 3 Kohlenstoffatomen, insbesondere um Wasserstoffatom, Methyl- und Ethylrest.

Beispiele für Reste A sind Reste der Formeln H₂NCH₂-, H₂N(CH₂)₂-, H₂N(CH₂)₃-, H₂N(CH₂)₂NH(CH₂)₂-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, H₃CNH(CH₂)₂-, C₂H₅NH(CH₂)₂-, H₂N(CH₂)₄-, H₂N(CH₂)₅-, H(NHCH₂CH₂)₃-, C₄H₉NH(CH₂)₂NH(CH₂)₂-, cyclo-C₆H₁₁NH(CH₂)₃-, cyclo-C₆H₁₁NH(CH₂)₂-, (CH₃)₂N(CH₂)₃-, (CH₃)₂N(CH₂)₂-, (C₂H₅)₂N(CH₂)₃-, cyclo-C₆H₁₁NH-, CH₃CH₂CH(CH₃)NH- und (C₂H₅)₂N(CH₂)₂-.

Bevorzugt handelt es sich bei A um H₂N(CH₂)₃-, H₂N(CH₂)₂NH(CH₂)₃-, H₃CNH(CH₂)₃-, C₂H₅NH(CH₂)₃-, cyclo-C₆H₁₁NH-, CH₃CH₂CH(CH₃)NH- und cyclo-C₆H₁₁NH(CH₂)₃-Rest, wobei H₂N(CH₂)₂NH(CH₂)₃- und cyclo-C₆H₁₁NH(CH₂)₃-Rest besonders bevorzugt sind.

Handelt es sich bei den Organosiliciumverbindungen enthaltend Einheiten der Formel (V) um Silane, so ist k bevorzugt 0, 1 oder 2, besonders bevorzugt 0 oder 1, 1 bevorzugt 1 oder 2, besonders bevorzugt 1, und m bevorzugt 1, 2 oder 3, besonders bevorzugt 2 oder 3, mit der Maßgabe, dass die Summe aus k+1+m gleich 4 ist.

Beispiele für die erfindungsgemäß gegebenenfalls eingesetzten Silane der Formel (V) sind H₂N (CH₂) ₃-Si (OCH₃) ₃, H₂N (CH₂) ₃-Si (OC₂H₅) ₃, H₂N (CH₂) ₃-Si (OCH₃) ₂CH₃, H₂N (CH₂) ₃-Si (OC₂H₅) ₂CH₃, H₂N (CH₂) ₂NH (CH₂)₃-Si (OCH₃) ₃, H₂N(CH₂) ₂NH (CH₂) ₃-Si (OC₂H₅) ₃, H₂N (CH₂) ₂NH (CH₂) ₃-Si (OCH₃) ₂CH₃, H₂N (CH₂) ₂NH (CH₂) ₃-Si (OC₂H₅) ₂CH₃, (CH₃) ₃Si-NH-Si (CH₃) ₃, H₂N (CH₂) ₂NH (CH₂) ₃-Si (OH) ₃, H₂N(CH₂)₂NH(CH₂)₃-Si(OH)₂CH₃, H₂N (CH₂) ₂NH (CH₂) ₂NH (CH₂) ₃-Si (OCH₃) ₃, H₂N (CH₂) ₂NH (CH₂)₂NH(CH₂) ₃-Si (OC₂H₅) ₃, cyclo-C₆H₁₁NH(CH₂) ₃-Si (OCH₃) ₃, cyclo-C₆H₁₁NH(CH₂) ₃-Si (OC₂H₅) ₃, cyclo-C₆H₁₁NH(CH₂)₃-Si(OCH₃)₂CH₃, cyclo-C₆H₁₁NH (CH₂) ₃-Si (OC₂H₅) ₂CH₃, cyclo-C₆H₁₁NH(CH₂)₃-Si(OH)₃, cyclo-C₆H₁₁NH(CH₂) ₃-Si (OH) ₂CH₃, (CH₃) ₂Si (NHCH (CH₃) CH₂CH₃) ₂, (cyclo-C₆H₁₁NH) ₃Si-CH₃, (CH₃CH₂ (CH₃)CHNH) ₃Si-CH₃, HN ( (CH₂) ₃-Si (OCH₃) ₃) ₂ und HN ( (CH₂) ₃-Si (OC₂H₅)₃) ₂ sowie deren Teilhydrolysate, wobei H₂N (CH₂) ₂NH (CH₂) ₃-Si (OCH₃) ₃, H₂N (CH₂) ₂NH (CH₂) ₃-Si (OC₂H₅) ₃, H₂N (CH₂) ₂NH (CH₂) ₃-Si (OCH₃) ₂CH₃, H₂N (CH₂) ₂NH (CH₂) ₃-Si (OC₂H₅) ₂CH₃, H₂N (CH₂) ₂NH (CH₂) ₃-Si (OH) ₃, H₂N (CH₂) ₂NH (CH₂) ₃-Si (OH) ₂CH₃, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH (CH₂) ₃-Si (OCH₃) ₂CH₃, cyclo-C₆H₁₁NH (CH₂) ₃-Si (OC₂H₅)₂CH₃, cyclo-C₆H₁₁NH(CH₂)₃-Si(OH)₃ sowie cyclo-C₆H₁₁NH (CH₂) ₃-Si (OH) ₂CH₃ bevorzugt und H₂N (CH₂) ₂NH (CH₂) ₃-Si (OCH₃) ₃, H₂N (CH₂) ₂NH (CH₂) ₃-Si (OCH₃) ₂CH₃, cyclo-C₆H₁₁NH (CH₂) ₃-Si(OCH₃) ₃, cyclo-C₆H₁₁NH (CH₂) ₃-Si (OCH₃) ₂CH₃, H₂N (CH₂) ₂NH (CH₂) ₃-Si (OH) ₃ und H₂N (CH₂) ₂NH (CH₂) ₃-Si (OH) ₂CH₃ sowie jeweils deren Teilhydrolysate besonders bevorzugt sind.

Falls es sich bei der Organosiliciumverbindung enthaltend Einheiten der Formel (V) um Organopolysiloxane handelt, ist der durchschnittliche Wert von k vorzugsweise zwischen 0,5 und 2,5, besonders bevorzugt zwischen 1,4 und 2,0, der durchschnittliche Wert von 1 vorzugsweise zwischen 0,01 und 1,0, besonders bevorzugt zwischen 0,01 und 0,6, und der durchschnittliche Wert von m vorzugsweise zwischen 0 und 2,0, besonders bevorzugt zwischen 0 und 0,2, mit der Maßgabe, dass die Summe aus k, 1 und m kleiner oder gleich 3 ist.

Beispiele für die erfindungsgemäß gegebenenfalls eingesetzten Siloxane enthaltend Einheiten der Formel (V) sind
H₂N(CH₂)₃-Si(OCH₃)₂-O-Si(CH₃)(OCH₃)₂,
H₂N(CH₂)₃-Si(OC₂H₅)₂-O-Si(CH₃)(OCH₃)₂,
H₂N(CH₂)₃-Si(OC₂H₅)₂-O-Si(CH₃)(OC₂H₅)₂,
H₂N(CH₂)₃-Si(OCH₃)(CH₃)-O-Si(CH₃)(OCH₃)₂,
H₂N(CH₂)₃-Si(OCH₃)(CH₃)-O-Si(OCH₃)₃,
H₂N(CH₂)₃-Si(OC₂H₅)(CH₃)-O-Si(OCH₃)₃,
H₂N(CH₂)₂NH(CH₂)₃-Si(OCH₃)₂-O-Si(CH₃)(OCH₃)₂,
H₂N(CH₂)₂NH(CH₂)₃-Si(OC₂H₅)₂-O-Si(CH₃)(OCH₃)₂,
H₂N(CH₂)₂NH(CH₂)₃-Si(OC₂H₅)₂-O-Si(CH₃)(OC₂H₅)₂,
H₂N(CH₂)₂NH(CH₂)₃-Si(OCH₃)(CH₃)-O-Si(CH₃)(OCH₃)₂,
H₂N(CH₂)₂NH(CH₂)₃-Si(OCH₃)(CH₃)-O-Si(OCH₃)₃,
H₂N(CH₂)₂NH(CH₂)₃-Si(OC₂H₅)(CH₃)-O-Si(OCH₃)₃,
cyclo-C₆H₁₁NH(CH₂)₃-Si(OCH₃)₂-O-Si(CH₃)(OCH₃)₂,
cyclo-C₆H₁₁NH(CH₂)₃-Si(OC₂H₅)₂-O-Si(CH₃)(OCH₃)₂,
cyclo-C₆H₁₁NH(CH₂)₃-Si(OC₂H₅)₂-O-Si(CH₃)(OC₂H₅)₂,
cyclo-C₆H₁₁NH(CH₂)₃-Si(OCH₃)(CH₃)-O-Si(CH₃)(OCH₃)₂,
cyclo-C₆H₁₁NH(CH₂)₃-Si(OCH₃)(CH₃)-O-Si(OCH₃)₃,
cyclo-C₆H₁₁NH(CH₂)₃-Si(OC₂H₅)(CH₃)-O-Si(OCH₃)₃,
H₂N(CH₂)₃-Si(OCH₃)₂-(O-Si(CH₃)₂)₀₋₁₀₀-(O-Si(CH₃)-(CH₂)₃NH₂)₀₋₁₀₀-0-Si(OCH₃)₂-(CH₂)₃NH₂,
H₂N(CH₂)₂NH(CH₂)₃-Si(OCH₃)₂-(O-Si(CH₃)₂)₀₋₁₀₀-(O-Si(CH₃)-(CH₂)₃
NH (CH₂)₂NH₂)₀₋₁₀₀-O-Si(OCH₃)₂-(CH₂)₃NH (CH₂)₂NH₂,
H₂N(CH₂)₃-Si(OCH₂CH₃)₂-(O-Si(OCH₂CH₃)₂)₁₋₁₀₀-(O-Si(OCH₂CH₃)(CH₂)₃NH₂)₀₋₁₀₀-O-Si(OCH₂CH₃)₂-(CH₂)₃NH₂,
Si (OCH₂CH₃)₃-(O-Si(OCH₂CH₃)₂)₀₋₁₀₀-(O-Si(OCH₂CH₃)(CH₂)₃NH₂)₁₋₁₀₀-O-Si (OCH₂CH₃)₃ und
cyclo-C₆H₁₁NH(CH₂)₃-Si(OCH₃)₂-(O-Si(CH₃)₂)₀₋₁₀₀-(O-Si(CH₃)-(CH₂)₃NH cyclo-C₆H₁₁)₀₋₁₀₀-O-Si(OCH₃)₂-(CH₂)₃NH cyclo-C₆H₁₁.

Bevorzugt handelt es sich bei Komponente (C21) um H₂N(CH₂)₃-Si(OCH₃)₃, H₂N(CH₂)₃-Si(OC₂H₅)₃, H₂N (CH₂) ₃-Si (OCH₃) ₂CH₃,
H₂N (CH₂) ₃-Si (OC₂H₅) ₂CH₃, H₂N(CH₂)₂NH(CH₂)₃-Si(OCH₃)₃,
H₂N (CH₂) ₂NH (CH₂) ₃-Si (OC₂H₅) ₃, H₂N (CH₂) ₂NH (CH₂) ₃-Si (OCH₃) ₂CH₃,
(CH₃) ₂Si (NHCH (CH₃) CH₂CH₃) ₂, H₂N(CH₂)₃-Si(OCH₃)₂-(O-Si(CH₃)₂)₀₋₁₀₀-(O-Si (CH₃)-(CH₂) ₃ NH₂) ₀₋₁₀₀-O-Si(OCH₃) ₂- (CH₂) ₃ NH₂,
H₂N (CH₂) ₂NH (CH₂) ₃-Si (OCH₃) ₂- (O-Si (CH₃) ₂) ₀₋₁₀₀-(O-Si (CH₃) - (CH₂) ₃
NH (CH₂) ₂NH₂) ₀₋₁₀₀-O-Si(OCH₃) ₂- (CH₂)₃ NH (CH₂) ₂NH₂,
H₂N (CH₂)₃-Si (OCH₂CH₃) ₂- (O-Si (OCH₂CH₃) ₂) ₁₋₁₀₀-(O-Si (OCH₂CH₃) (CH₂) ₃NH₂) ₀₋₁₀₀-O-Si (OCH₂CH₃)₂- (CH₂) ₃NH₂,
Si (OCH₂CH₃)₃-(O-Si(OCH₂CH₃)₂)₀₋₁₀₀-(O-Si(OCH₂CH₃)(CH₂)₃NH₂)₁₋₁₀₀-O-Si (OCH₂CH₃)₃, (cyclo-C₆H₁₁NH)₃Si-CH₃, (CH₃CH₂(CH₃)CHNH)₃Si-CH₃, CH₃CH₂(CH₃)CHNH₂, cyclo-C₆H₁₁NH₂, (CH₃CH₂)₂N(CH₂)₃NH₂,
(CH₃(CH₂)₃)₂N(CH₂)₃NH₂, CH₃CH₂CH₂CH₂NH₂, CH₃(CH₂)₇NH₂,
(CH₃)₂CH(CH₂)₅NH₂, (CH₃CH₂(CH₃)CH)₂NH,
(cyclo-C₆H₁₁)₂NH, (CH₃CH₂CH₂CH₂)₂NH, (CH₃(CH₂)₇)₂NH, ((CH₃)₂CH(CH₂)₅)₂NH, (CH₃CH₂CH₂CH₂)₃N, (CH₃(CH₂)₇)₃N und
((CH₃)₂CH(CH₂)₅)₃N, wobei (CH₃CH₂CH₂CH₂)₂NH besonders bevorzugt ist.

Komponente (C21) sind handelsübliche Produkte bzw. nach in der Chemie gängigen Verfahren herstellbar.

Bei den in der erfindungsgemäß eingesetzten Zubereitung (C) gegebenenfalls enthaltenden Alkoholen (C22) handelt es bevorzugt um einwertige Alkohole.

Bevorzugt handelt es sich bei den erfindungsgemäß gegebenenfalls eingesetzten Alkoholen (C22) um solche der Formel

R¹¹OH (VI),

wobei R¹¹ gleich oder verschieden sein kann und Kohlenwasserstoffreste mit 1 bis 18 Kohlenstoffatomen bedeutet.

Bevorzugt handelt es sich bei Rest R¹¹ um Kohlenwasserstoffreste mit 1 bis 6 Kohlenstoffatomen, besonders bevorzugt um den Methyl-, Ethyl-, iso-Propyl- und n-Propylrest insbesondere um den Methylrest.

Beispiele für erfindungsgemäß eingesetzte Alkohole (C22) sind Methanol, Ethanol, Isopropanol und n-Propanol, wobei Methanol und Ethanol bevorzugt und Methanol besonders bevorzugt sind.

Komponente (C22) sind handelsübliche Produkte bzw. nach in der Chemie gängigen Verfahren herstellbar.

Bei dem im erfindungsgemäßen Verfahren eingesetzten Zusatzstoff (C2) kann es sich nur um das Amin (C21) oder nur um Alkohol (C22) handeln oder auch um Gemische aus Aminen und Alkoholen.

Bei dem im erfindungsgemäßen Verfahren eingesetzten Zusatzstoff (C2) handelt es sich bevorzugt um Amin (C21).

Falls die erfindungsgemäß eingesetzte Zubereitung (C) Zusatzstoff (C21) enthält, handelt es sich um Mengen von bevorzugt 3 bis 2000 Gew.-ppm, besonders bevorzugt von 20 bis 1000, jeweils bezogen auf die Gesamtmenge an Komponente (A) und (B).

Falls die erfindungsgemäß eingesetzte Zubereitung (C) Zusatzstoff (C22) enthält, handelt es sich um Mengen von bevorzugt 100 bis 6000 Gew.-ppm, besonders bevorzugt von 500 bis 3000 Gew.-ppm, jeweils bezogen auf die Gesamtmenge an Komponente (A) und (B).

Bei dem erfindungsgemäßen Verfahren können die einzelnen Komponenten in beliebiger Reihenfolge und auf bisher bekannte Art und Weise miteinander vermischt werden. Es können aus einigen Komponenten auch Vormischungen hergestellt werden, wie z.B. eine Mischung aus den Komponenten (B) und (C), die dann mit den anderen Komponenten vermischt werden. Einzelne Bestandteile können auch gleich zu Beginn oder während des Mischprozesses anwesend sein bzw. zugeführt werden. So können z.B. ein Teil der Komponente (B) oder die Zubereitung (C) auch erst 1 bis 60 Minuten nach dem Vermischen der jeweils anderen Bestandteile zugegeben werden.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Das erfindungsgemäße Verfahren wird bevorzugt ohne zusätzliches Heizen bei Umgebungstemperaturen bzw. den Temperaturen, die sich beim Mischen der einzelnen Komponenten ergeben, durchgeführt. Es handelt sich dabei bevorzugt um Temperaturen von 10 bis 60°C, besonders bevorzugt 15 bis 40°C.

Das erfindungsgemäße Verfahren wird bevorzugt beim Druck der umgebenden Atmosphäre, also 900 bis 1100 hPa, durchgeführt; es kann aber auch bei Überdruck gearbeitet werden, wie bei Drücken zwischen 1100 und 3000 hPa Absolutdruck, insbesondere bei kontinuierlicher Arbeitsweise, wenn z.B. diese Drücke sich bei geschlossenen Systemen durch den Druck beim Pumpen und durch den Dampfdruck der eingesetzten Materialien bei erhöhten Temperaturen ergeben.

Das erfindungsgemäße Verfahren wird bevorzugt unter Ausschluss von Feuchtigkeit durchgeführt, wie in getrockneter Luft oder Stickstoff.

Das erfindungsgemäße Verfahren kann - falls erwünscht - unter Schutzgas, wie Stickstoff, durchgeführt werden.

Bei dem erfindungsgemäßen Verfahren kann nach Beendigung der Reaktion die Reaktionsmischung entflüchtigt werden, wobei die Entflüchtigung mittels Vakuum im selben Apparat oder in einem nachgeschalteten Apparat, mit oder ohne Inertgaseinspeisung, bei Raumtemperaturen oder erhöhten Temperaturen durchgeführt wird. Bei den leichtflüchtigen Bestandteilen handelt es sich bevorzugt um Alkohole, wie Methanol oder Ethanol.

Das erfindungsgemäße Verfahren kann kontinuierlich oder diskontinuierlich durchgeführt werden.

Gemäß einer bevorzugten Ausführungsform des erfindungsgemäßen Verfahrens wird das Polymer (A) kontinuierlich mittels eines Dynamikmischers mit einer Mischung aus dem Silan (B), dem Zinkchelat (C1) und dem Alkohol (C22) vermischt und in ein Lagersilo oder eine Verweilstrecke gepumpt. In der Reaktionszone herrscht ein Absolutdruck von ca. 1,5 bar. Eine Nachbehandlung, wie Desaktivierung oder Entflüchtigung, findet nicht statt. Die Temperatur hängt wesentlich von der Ausgangstemperatur des Polymers (A) ab und liegt im Bereich von 20 bis 60°C. Es kann aber auch direkt nach der Herstellung von Komponente (A) die Mischung aus (B) und (C) zudosiert werden, dabei können die Temperaturen zwar im Bereich von 80 bis 120°C liegen, allerdings wird danach das Gemisch bevorzugt auf Temperaturen unter 60°C abgekühlt.

Eine andere bevorzugte Ausführungsform des erfindungsgemäßen Verfahrens besteht im Vermischen von Polymer (A) mit Siliconweichmacher und einer Mischung aus dem Silan (B), dem Zinkchelat (C1) und dem Amin (C21) in einem Rührkessel mit Dissolverrührer unter Stickstoff und bevorzugt einer Abfüllung des Reaktionsgemisches in einen Lagertank.

Eine weitere bevorzugte Ausführungsform des erfindungsgemäßen Verfahrens besteht im Vermischen von Polymer (A) mit einer Mischung aus dem Silan (B), dem Zinkchelat (C1) und dem Amin (C21) in einem Rührkessel mit Dissolverrührer unter Stickstoff, einer anschließenden Nachentflüchtigung des Reaktionsgemisches bei einem Absolutdruck von 10 bis 50 mbar sowie bevorzugt der Abfüllung in einen Lagertank.

Nach dem erfindungsgemäßen Verfahren kann eine Vielzahl von Organyloxygruppen aufweisende Organosiliciumverbindungen hergestellt werden. Dabei können sowohl reine Silane, als auch Mischungen von Silanen verwendet werden.

Beispiele für die erfindungsgemäß hergestellten Organyloxygruppen aufweisenden Organosiliciumverbindungen sind
(MeO)₂ (Me) SiO (Si (CH₃) ₂O)₃₀₋₁₀₀₀Si(CH₃)₂ (CH₂) ₃NH₂,
(MeO) ₂ (Me) SiO (Si (CH₃) ₂O)₃₀₋₁₀₀₀Si (CH₃)₂OSi(Me) (OMe) ₂,
(MeO) ₂ (Me) SiO (Si (CH₃) ₂O)₃₀₋₁₀₀₀Si(CH₃) ₂OSi(Me) ₂ (OMe),
(MeO)₂ (Vi) SiO(Si (CH₃) ₂O)₃₀₋₁₀₀₀Si(CH₃) ₂OSi(Me) (OMe) ₂,
(EtO) ₂ (Vi) SiO (Si (CH₃) ₂O)₃₀₋₁₀₀₀Si(CH₃)₂OSi (Me) (OMe) ₂,
(MeO) ₂ (Me) SiO (Si (CH₃) ₂O)₃₀₋₁₀₀₀Si(CH₃) ₂OSi (OMe) ₃,
(EtO) ₃SiO (Si (CH₃)₂O)₃₀₋₁₀₀₀Si(CH₃) ₂OSi(OEt) ₃,
(MeO) ₂ (Me) SiO (Si (CH₃) ₂O)₃₀₋₁₀₀₀Si(CH₃) ₃,
(MeO)₂ (Me) SiO (Si (CH₃) ₂O)₁₋₁₀₀Si(CH₃) ₂ (CH₂) ₃O(CH₂CH (CH₃) 0) ₁₀₋₁₀₀₀ (CH₂) ₃ (Si (CH₃)₂O)₁₋₁₀₀Si(CH₃) ₂ (OSi (Me) (OMe) ₂) , (MeO)₂(Me)SiO(Si(CH₃)₂O)₃₋₅₀₀Si(O)₃[(Si(CH₃)₂O)₃₋₅₀₀Si(Me) (OMe)₂]₃ und (MeO)₂(Me)SiO(Si(CH₃)₂O)₃₋₅₀₀Si(CH₃)(O)₂[(Si(CH₃)₂O)₃₋₅₀₀Si(Me)(OMe)₂]₂.

Bei den erfindungsgemäß hergestellten Organosiliciumverbindungen handelt es sich bevorzugt um solche mit 10 bis 10 000, besonders bevorzugt mit 100 bis 2000, Siliciumatomen.

Die erfindungsgemäß hergestellten Organyloxygruppen aufweisenden Organosiliciumverbindungen können für alle Zwecke verwendet werden, für die auch bisher Organyloxygruppen aufweisende Organosiliciumverbindungen verwendet worden sind.

Insbesondere eignen sie sich zur Herstellung von durch Kondensationsreaktion vernetzbaren Massen.

Die zur Herstellung von durch Kondensationsreaktion vernetzbaren Massen außer den erfindungsgemäß hergestellten Organyloxygruppen aufweisenden Organosiliciumverbindungen üblicherweise verwendeten Bestandteile (E) sind solche ausgewählt aus der Gruppe der Vernetzer, bei denen es sich um die gleichen Verbindungen handeln kann, wie bei Komponente (B) beschrieben, Kondensationskatalysatoren, Haftvermittler, Füllstoffe, Weichmacher, Stabilisatoren, Farbstoffe, Fungizide und Rheologieadditive. Die Bestandteile (E) sind in der Literatur bereits vielfach beschrieben. Hierzu sei beispielsweise auf DE-A 102004014217, DE-A 102004014216, DE 10121514 und DE 10158520, verwiesen, die zum Offenbarungsgehalt der vorliegenden Erfindung zu zählen sind.

Diese Bestandteile (E) können unmittelbar nach dem Verrühren der erfindungsgemäß eingesetzten Bestandteile (A), (B) und (C) zugegeben werden, so dass die vernetzbaren Massen mit den erfindungsgemäß hergestellten Organyloxygruppen aufweisenden Organosiliciumverbindungen als Basispolymer in einem Reaktionsgefäß hergestellt werden können. Es können die Bestandteile (E) aber auch nach einer Zwischenlagerung der erfindungsgemäß hergestellten Organyloxygruppen aufweisenden Organosiliciumverbindungen von wenigen Minuten bis einigen Monaten zugegeben werden.

Gemäß einer weiteren bevorzugten Variante des erfindungsgemäßen Verfahrens wird Polymer (A) mit Siliconweichmacher und einer Mischung aus dem Silan (B), dem Zinkchelat (C1) und dem Amin (C21) in einem Pastenmischer mit Flügelrührer und Abstreifer unter getrockneter Luft verrührt. Nach 10 bis 30 Minuten werden weitere übliche Bestandteile zur Herstellung von durch Kondensationsreaktion vernetzbaren Massen, wie Kondensationskatalysatoren, Haftvermittler, Füllstoffe, Weichmacher, Stabilisatoren, Farbstoffe, Fungizide und Rheologieadditive zugegeben und in der Masse homogen verteilt. Inerte Bestandteile, wie Farbstoffe, Fungizide und Rheologieadditive, können zur besseren Verteilung vor dem Polymer (A) vorgelegt werden.

Das erfindungsgemäße Verfahren hat den Vorteil, dass auf einfache Art und Weise Organyloxygruppen aufweisende Organosiliciumverbindungen hergestellt werden können.

Das erfindungsgemäße Verfahren hat des Weiteren den Vorteil, dass bereits geringe Mengen an Zubereitung (C) ohne zusätzliches Heizen ein rasches Herstellen von organyloxyterminierten Organosiliciumverbindungen ermöglicht, welche für die Herstellung härtbarer Massen einsetzbar sind.

Das erfindungsgemäße Verfahren hat den Vorteil, dass die hergestellten Organyloxygruppen aufweisenden Organosiliciumverbindungen, auch nach eventueller Lagerung, keine Trübung aufweisen und somit optimal für die Herstellung transparenter härtbarer Massen einsetzbar sind.

Das erfindungsgemäße Verfahren hat den Vorteil, dass die erfindungsgemäß hergestellten Organyloxygruppen aufweisenden Organosiliciumverbindungen gleich nach der Herstellung ohne vorhergehende Isolierung oder Nachbearbeitung, wie Neutralisation, Filtration oder Desaktivierung durch hohe Temperaturen, zur Herstellung von vernetzbaren Massen eingesetzt werden können.

Das erfindungsgemäße Verfahren hat ferner den Vorteil, dass sich die Viskosität nach dem Verrühren (Mischviskosität) praktisch nicht mehr ändert und somit bei der Weiterverarbeitung keine zusätzlichen Probleme, wie z.B. durch zeitweisen oder allmählichen Viskositätsanstieg, auftreten.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Im Folgenden wird die Beurteilung der hergestellten Alkoxy-terminierten Polydimethylsiloxane auf die weitestgehende Abwesenheit von Silanolgruppen (Si-OH-Gehalt kleiner 30 Gew.-ppm) hin anhand des sog. Titanat-Schnelltests durchgeführt:

Hergestelltes Polymer (z.B. solches, das vor der Reaktion 2,5 mg Si-gebundene OH-Gruppen enthalten hat) und Isopropyltitanat (z.B. 0,1 g) wurden mit einem Spachtel 3 Minuten verrührt. Wenn eine nach oben gezogene Probe in einem dünnen Faden nach unten läuft, ist die Probe weitestgehende silanolfrei. Wenn die nach oben gezogene Probe abreißt, so enthält die Polymerprobe noch mehr als 30 Gew.-ppm Si-gebundene OH-Gruppen.

### Beispiel 1

750 g eines α,ω-Dihydroxypolydimethylsiloxans mit einer Viskosität von 75 000 mPa·s, 135 g eines trimethylsilylendblockierten Polydimethylsiloxans mit einer Viskosität von 1 000 mPa·s, 10,3 g Methyltrimethoxysilan, 5,2 g Vinyltrimethoxysilan, 0,16 g Zink-acetylacetonat Hydrat (käuflich erhältlich bei der Fa. Sigma-Aldrich Co., Deutschland) und 0,32 g Dibutylamin (käuflich erhältlich bei der Fa. Sigma-Aldrich Co., Deutschland) wurden in einem Planetenmischer unter Ausschluss von Feuchtigkeit 10 Minuten bei 250 Upm gerührt. Nach 60 Minuten konnten keine Silanolgruppen mehr nachgewiesen werden.

### Beispiel 2

Die in Beispiel 1 beschriebene Verfahrensweise wird wiederholt, mit der Abänderung, dass anstelle von 750 g des α,ω-Dihydroxy-polydimethylsiloxans mit einer Viskosität von 75 000 mPa·s 750 g eines α,ω-Dihydroxypolydimethylsiloxans mit einer Viskosität von 20 000 mPa·s verwendet wurde. Nach 120 Minuten konnten keine Silanolgruppen mehr nachgewiesen werden.

### Beispiel 3

Die in Beispiel 1 beschriebene Verfahrensweise wird wiederholt, mit der Abänderung, dass statt mit 250 Upm mit 500 Upm gerührt wurde. Die Temperatur stieg dabei auf 35°C an. Nach 40 Minuten konnten keine Silanolgruppen mehr nachgewiesen werden.

### Beispiel 4

Die in Beispiel 1 beschriebene Verfahrensweise wird wiederholt, mit der Abänderung, dass anstelle von 0,32 g Dibutylamin 0,64 g [3-(2-Aminoethylamino)-propyl]-trimethoxysilan (käuflich erhältlich bei der Fa. Sigma-Aldrich Co., Deutschland) verwendet wurde. Nach 60 Minuten konnten keine Silanolgruppen mehr nachgewiesen werden.

### Beispiel 5

Die in Beispiel 1 beschriebene Verfahrensweise wird wiederholt, mit der Abänderung, dass anstelle von trimethylsilylendblockierten Polydimethylsiloxans die gleiche Menge eines Kohlenwasserstoffgemisches mit einem Siedebereich von 305 bis 325°C, einem paraffinischen Kohlenstoffanteil von 64%, einem naphthenischen Kohlenstoffanteil von 36% und einen aromatischen Kohlenstoffanteil von unter 0,1%, gemessen nach DIN51378, verwendet wurde. Nach 120 Minuten konnten keine Silanolgruppen mehr nachgewiesen werden.

### Beispiel 6

Die in Beispiel 1 beschriebene Verfahrensweise wird wiederholt, mit der Abänderung, dass anstelle von 10,3 g Methyltrimethoxysilan und 5,2 g Vinyltrimethoxysilan 24,0 g Tetraethylorthosilikat (käuflich erhältlich bei der Fa. Sigma-Aldrich Co., Deutschland) verwendet wurde. Nach 72 Stunden konnten keine Silanolgruppen mehr nachgewiesen werden.

### Beispiel 7

Die in Beispiel 1 beschriebene Verfahrensweise wird wiederholt, mit der Abänderung, dass anstelle von 0,32 g Dibutylamin 1,44 g Methanol (käuflich erhältlich bei der Fa. Sigma-Aldrich Co., Deutschland) verwendet wurde. Nach 24 Stunden konnten keine Silanolgruppen mehr nachgewiesen werden.

### Beispiel 8

Die in Beispiel 1 beschriebene Verfahrensweise wird wiederholt, mit der Abänderung, dass anstelle von 0,16 g Zink-acetylacetonat Hydrat dieselbe Menge Zink-hexafluoracetylacetonat Dihydrat, 98% (käuflich erhältlich bei der Fa. Sigma-Aldrich Co., Deutschland) verwendet wurde. Nach 120 Minuten konnten keine Silanolgruppen mehr nachgewiesen werden.

### Beispiel 9

Die in Beispiel 1 beschriebene Verfahrensweise wird wiederholt, mit der Abänderung, dass anstelle von 0,16 g Zink-acetylacetonat Hydrat die selbe Menge Zink-bis-(2,2,6,6-tetramethyl-3,5-heptandionat, 97% (käuflich erhältlich bei der Fa. Sigma-Aldrich Co., Deutschland) verwendet wurde. Nach 30 Minuten konnten keine Silanolgruppen mehr nachgewiesen werden.

### Vergleichsbeispiel 1

Die in Beispiel 1 beschriebene Verfahrensweise wird wiederholt, mit der Abänderung, dass kein Dibutylamin verwendet wurde. Nach 48 Stunden konnten keine Silanolgruppen mehr nachgewiesen werden.

### Vergleichsbeispiel 2

Die in Beispiel 1 beschriebene Verfahrensweise wird wiederholt, mit der Abänderung, dass anstelle von 0,16 g Zink-acetylacetonat Hydrat dieselbe Menge Aluminiumacetylacetonat (käuflich erhältlich bei der Fa. Sigma-Aldrich Co., Deutschland) verwendet wurde. Nach 72 Stunden konnten noch immer Silanolgruppen nachgewiesen werden.

### Vergleichsbeispiel 3

Die in Beispiel 1 beschriebene Verfahrensweise wird wiederholt, mit der Abänderung, dass anstelle von 0,16 g Zink-acetylacetonat Hydrat dieselbe Menge Zirconium(IV)-acetylacetonat, 98% (käuflich erhältlich bei der Fa. Sigma-Aldrich Co., Deutschland) verwendet wurde. Nach 72 Stunden konnten noch immer Silanolgruppen nachgewiesen werden.

### Vergleichsbeispiel 4

Die in Beispiel 1 beschriebene Verfahrensweise wird wiederholt, mit der Abänderung, dass anstelle von 0,16 g Zink-acetylacetonat Hydrat dieselbe Menge Zinkoctoat (käuflich erhältlich bei der Fa. Acima, Schweiz unter der Bezeichnung METATIN^{™} Catalyst Zn-18) verwendet wurde. Nach 72 Stunden konnten noch immer Silanolgruppen nachgewiesen werden.

### Beispiel 10

408 g eines α,ω-Dihydroxypolydimethylsiloxans mit einer Viskosität von 75 000 mPa·s, 185 g eines trimethylsilylendblockierten Polydimethylsiloxans mit einer Viskosität von 1 000 mPa·s, 11,2g Methyltrimethoxysilan, 11,2 g Vinyltrimethoxysilan, 0,09 g Zink-acetylacetonat Hydrat (käuflich erhältlich bei der Fa. Merck, Deutschland) und 0,35 g Dibutylamin (käuflich erhältlich bei der Fa. Merck, Deutschland) wurden in einem Planetenmischer unter Ausschluss von Feuchtigkeit 15 Minuten bei 250 Upm gerührt. Anschließend wurden 12,5 g eines Haftvermittlers, der hergestellt wird durch Umsetzung von 1 Teil Aminopropyltriethoxysilan mit 1 Teil Methyltriethoxysilan-Hydrolysat mit einem Ethoxygehalt von 37 %, 1,1 g Octylphosphonsäure und 4,5 g Aminopropyltrimethoxysilan dazugegeben und 5 Minuten gerührt. Anschließend wird der Ansatz durch homogenes Einmischen von 63 g pyrogener Kieselsäure mit einer spezifischen Oberfläche von 150 m²/g (käuflich erhältlich unter der Bezeichnung HDK® V15 der Wacker Chemie AG), 1,4 g eines Polyethylenglykolpolypropylenglykol-copolymers mit einer Viskosität von 700 mPa·s und 2,5 g eines Zinnkatalysators, der hergestellt wird durch Umsetzung von Di-n-butylzinndiacetat und Tetraethoxysilan, vervollständigt. Zum Schluss wird die Mischung 5 Minuten bei ca. 100 mbar Absolutdruck gerührt, und luftdicht abgefüllt und gelagert.

Die so erhaltene Masse wurde in einer Dicke von 2 mm auf einer PE-Folie aufgetragen und bei 23°C/50 % rel. Luftfeuchtigkeit gelagert. Nach 7 Tagen Aushärtung wurde der Modul bei 100% Dehnung mit 0,40 MPa bestimmt.
Desweiteren wurde ein Teil der Masse in einer Aluminiumtube abgefüllt und bei 50°C gelagert. Nach der in Tabelle 1 angegebenen Vorlagerung wurde jeweils eine Probe der Masse auf eine PE-Folie in einer Dicke von 2 mm aufgetragen und bei 23°C/50 % rel. Luftfeuchtigkeit gelagert. Unter diesen Bedingungen wurden die Hautbildungszeit und die Klebrigkeit nach 24 Stunden Lagerung beurteilt. Die Ergebnisse finden sich in Tabelle 1.

**Tabelle 1**

| Vorlagerung | Hautbildungszeit [min] | Klebrigkeit |
|---|---|---|
| 1 Tag nach der Herstellung | 10 | klebfrei |
| 3 Wochen 50°C | 15 | klebfrei |
| 6 Wochen 50°C | 10 | klebfrei |

### Vergleichsbeispiel 5

Die in Beispiel 10 beschriebene Verfahrensweise wird wiederholt, mit der Abänderung, dass kein Dibutylamin verwendet wurde. Die Masse wurde beim abschließendem Mischen bei ca. 100 mbar Absolutdruck fest und konnte nicht weiter verarbeitet werden.

## Patentansprüche

1. Verfahren zur Herstellung von Organyloxygruppen aufweisenden Organosiliciumverbindungen, **dadurch gekennzeichnet, dass** mindestens eine Silanolgruppe aufweisende Organosiliciumverbindung (A) mit mindestens zwei Organyloxygruppen enthaltender Verbindung (B) in Anwesenheit einer Zubereitung (C) enthaltend Zinkchelat (C1) und mindestens einen Zusatzstoff (C2), ausgewählt aus der Gruppe bestehend aus basischen Stickstoff enthaltender Verbindung (C21) und Alkohol (C22), umgesetzt wird.

2. Verfahren nach Anspruch 1, **dadurch gekennzeichnet, dass** es sich bei der Silanolgruppen aufweisenden Organosiliciumverbindung (A) um solche enthaltend Einheiten der Formel
Rₐ(OH)_{b}SiO_{(4-a-b)/2} (I)
handelt, wobei
R gleiche oder verschiedene SiC-gebundene, gegebenenfalls substituierte Kohlenwasserstoffreste bedeuten,
a 0, 1, 2 oder 3 ist und
b 0, 1 oder 2 ist,
mit der Maßgabe, dass die Summe aus a+b≤4 ist und pro Molekül mindestens eine Einheit der Formel (I) mit b verschieden 0 anwesend ist.

3. Verfahren nach Anspruch 1 oder 2, **dadurch gekennzeichnet, dass** es sich bei der Organyloxygruppen aufweisenden Verbindung (B) um solche enthaltend Einheiten der Formel
R¹_{c}(OR²)_{d}(OH)ₑSiO_{(4-c-d-e)/2} (II)
handelt, wobei
R¹ gleich oder verschieden sein kann und eine für Rest R angegebene Bedeutung hat,
R² gleich oder verschieden sein kann und gegebenenfalls substituierter Kohlenwasserstoffrest, der mit Sauerstoffatomen unterbrochen sein kann, bedeutet,
c 0, 1, 2 oder 3 ist,
d 0, 1, 2, 3 oder 4 ist und
e 0 oder 1 ist,
mit der Maßgabe, dass die Summe aus c+d+e≤4 ist und pro Molekül mindestens zwei Reste -OR² vorhanden sind.

4. Verfahren nach einem oder mehreren der Ansprüche 1 bis 3, **dadurch gekennzeichnet, dass** Zubereitung (C) in Mengen von 5 bis 10000 Gew.-ppm, bezogen auf die Gesamtmenge an Komponente (A) und (B), eingesetzt wird.

5. Verfahren nach einem oder mehreren der Ansprüche 1 bis 4, **dadurch gekennzeichnet, dass** Zubereitung (C) Zinkchelat (C1) in Mengen von 1 bis 80 Gew.-% enthält.

## Claims

1. Process for preparing organosilicon compounds having organyloxy groups, **characterized in that** an organosilicon compound (A) having at least one silanol group is reacted with a compound (B) containing at least two organyloxy groups in the presence of a preparation (C) comprising a zinc chelate (C1) and at least one additive (C2) selected from the group consisting of compounds (C21) containing basic nitrogen and alcohols (C22).

2. Process according to Claim 1, **characterized in that** the organosilicon compound (A) having silanol groups is a compound comprising units of the formula
Rₐ(OH)_{b}SiO_{(4-a-b)/2} (I),
where
the radicals R are identical or different SiC-bonded, substituted or unsubstituted hydrocarbon radicals,
a is 0, 1, 2 or 3, and
b is 0, 1 or 2,
with the proviso that the sum a + b ≤ 4 and at least one unit of the formula (I) in which b is not 0 is present per molecule.

3. Process according to Claim 1 or 2, **characterized in that** the compound (B) having organyloxy groups is a compound comprising units of the formula
R¹_{c}(OR²)_{d}(OH)ₑSiO_{(4-c-d-e)/2} (II),
where
the radicals R¹ can be identical or different and each have one of the meanings given for the radicals R,
the radicals R² can be identical or different and can each be a substituted or unsubstituted hydrocarbon radical which may be interrupted by oxygen atoms,
c is 0, 1, 2 or 3,
d is 0, 1, 2, 3 or 4 and
e is 0 or 1,
with the proviso that the sum c + d + e ≤ 4 and at least two radicals -OR² are present per molecule.

4. Process according to one or more of Claims 1 to 3, **characterized in that** preparation (C) is used in amounts of from 5 to 10 000 ppm by weight, based on the total amount of components (A) and (B).

5. Process according to one or more of Claims 1 to 4, **characterized in that** preparation (C) contains zinc chelate (C1) in amounts of from 1 to 80% by weight.

## Revendications

1. Procédé pour la préparation de composés organosiliciés comportant des groupes organyloxy, **caractérisé en ce qu'**on fait réagir un composé organosilicié (A) comportant au moins un groupe silanol avec un composé (B) contenant au moins deux groupes organyloxy en présence d'une préparation (C) contenant un chélate de zinc (C1) et au moins un additif (C2), choisi dans l'ensemble constitué par un composé (C21) contenant de l'azote basique et un alcool (C22).

2. Procédé selon la revendication 1, **caractérisé en ce que** le composé organosilicié (A) comportant des groupes silanol est un composé contenant des unités de formule
Rₐ(OH)_{b}SiO_{(4-a-b)/2} (I)
dans laquelle
R représente des radicaux hydrocarbonés identiques ou différents, liés par une liaison SiC, éventuellement substitués,
a est 0, 1, 2 ou 3, et
b est 0, 1 ou 2,
étant entendu que la somme de a+b est ≤4 et qu'au moins une unité de formule (I) où b est différent de 0 est présente par molécule.

3. Procédé selon la revendication 1 ou 2, **caractérisé en ce que** le composé (B) comportant des groupes organyloxy est un composé contenant des unités de formule
R¹_{c}(OR²)_{d}(OH)SiO_{(4-c-d-e)/2} (II)
dans laquelle
R¹ peut être identique ou différent et a une signification donnée pour le radical R
R² peut être identique ou différent et représente un radical hydrocarboné éventuellement substitué, qui peut être interrompu par des atomes d'oxygène,
c est 0, 1, 2 ou 3,
d est 0, 1, 2, 3 ou 4 et
e est 0 ou 1,
étant entendu que la somme de c+d+e est ≤4 et qu'au moins deux radicaux -OR² sont présents par molécule.

4. Procédé selon une ou plusieurs des revendications 1 à 3, **caractérisé en ce que** la préparation (C) est utilisée en quantités de 5 à 10 000 ppm en poids, par rapport à la quantité totale des composants (A) et (B).

5. Procédé selon une ou plusieurs des revendications 1 à 4, **caractérisé en ce que** la préparation (C) contient le chélate de zinc (C1) en quantités de 1 à 80 % en poids.
